# EUROPÄISCHE PATENTSCHRIFT

(11) **EP 3 084 221 B1**
(45) Veröffentlichungstag und Bekanntmachung des Hinweises auf die Patenterteilung: **14.02.2018**
(21) Anmeldenummer: 13811946.6
(22) Anmeldetag: 19.12.2013
(51) Int. Cl.: F04C 28/06, F04C 29/00, F16D 41/08

(54) **KFZ-VAKUUMPUMPE MIT SCHALTBARER KUPPLUNG**
AUTOMOTIVE VACUUM PUMP WITH SWITCHABLE COUPLING
POMPE À VIDE D'AUTOMOBILE AVEC ACCOUPLEMENT EMBRAYABLE

(43) Veröffentlichungstag der Anmeldung: 26.10.2016
(73) Patentinhaber: Pierburg Pump Technology GmbH, 41460 Neuss (DE)
(72) Erfinder: CRAMER, Sebastian, 50259 Pulheim (DE)
(74) Vertreter: Patentanwälte ter Smitten Eberlein-Van Hoof Rütten Partnerschaftsgesellschaft mbB
(86) Internationale Anmeldenummer: PCT/EP2013/077430
(87) Internationale Veröffentlichungsnummer: WO 2015/090416

(56) Entgegenhaltungen:
- WO-A1-2012/164466
- WO-A2-2010/106505
- DE-A1- 3 816 435
- US-A- 3 279 571

## Beschreibung

Die Erfindung bezieht sich auf eine mechanische Kfz-Vakuumpumpe mit einer hydraulisch schaltbaren Formschluss- Kupplungsanordnung zum Verriegeln bzw. Entriegeln der Kupplung.

In Kraftfahrzeugen (Kfz) dient die Vakuumpumpe unter anderem dazu, einen Unterdruck von beispielsweise weniger als absolut 500 Millibar als potentielle Energie für Aktuatorik zur Verfügung zu stellen, beispielsweise für einen pneumatischen Bremskraftverstärker. Der Pumpbetrieb der Vakuumpumpe wird hierzu relativ selten benötigt, bei der Versorgung eines Bremskraftverstärkers beispielsweise bei jeweiligem Betriebsbeginn des Kfz und nach jedem Bremsvorgang. Die mechanische Vakuumpumpe wird durch den Kfz-Verbrennungsmotor mechanisch angetrieben. Um den Verschleiß und den Energieverbrauch für den Antrieb der Vakuumpumpe auf ein Minimum zu reduzieren, ist die Vakuumpumpe mit einer Kupplungsanordnung versehen, durch die das Kopplungselement, das von dem Verbrennungsmotor mechanisch angetrieben wird, und den Pumpenrotor, der als Verdichter ausgebildet ist, gezielt miteinander drehfest verriegeln bzw. voneinander lösen zu können.

Eine einfache Kupplungsanordnung ist eine Reibkupplung. Für einen zuverlässigen Betrieb und eine ausfallsichere Auslegung muss die Reibkupplung durch entsprechende Federelemente in den eingekuppelten Zustand vorgespannt sein. Zum Öffnen der Reibkupplung sind daher relativ hohe Öffnungskräfte erforderlich.

WO 2012/164466 A1 und WO 2010/106505 A2 offenbaren mechanische Kfz-Vakuumpumpen mit schaltbaren Klemmkupplungen.

Aufgabe der Erfindung ist es, eine mechanische Kfz-Vakuumpumpe mit einer Kupplungsanordnung zu schaffen, die ausfallsicher ist und mit geringen Schaltkräften auskommt.

Gemäß der Erfindung weist die Vakuumpumpe eine schaltbare Formschluss-Kupplungsanordnung zum drehfesten Verriegeln des Kopplungselements mit dem Pumpenrotor im Verriegelungszustand und zum Lösen des Kopplungselements von dem Pumpenrotor im Entriegelungszustand auf. Das Kopplungselement dient der drehfesten Ankopplung an den Verbrennungsmotor, so dass das Kopplungselement sich stets mit einer zu der Drehzahl des Verbrennungsmotors proportionalen Drehzahl dreht. Der Pumpenrotor ist ein Teil der Pumpmimik einer bevorzugt als Verdrängerpumpe ausgebildeten Pumpanordnung.

Eine Formschluss-Kupplungsanordnung wird im Formschluss miteinander verriegelt, so dass sehr hohe Drehmomente mit sehr hoher Zuverlässigkeit übertragen werden können. Die Kupplungsanordnung kann im Verriegelungszustand nicht durchrutschen. Da die Kraftübertragung im Verriegelungszustand über einen Formschluss erfolgt, sind grundsätzlich keine hohen Betätigungskräfte zum Schließen und Öffnen der Kupplung erforderlich. Bevorzugt wird die Kupplungsanordnung hydraulisch geschaltet.

Die Kupplungsanordnung weist einen mit dem Pumpenrotor oder dem Kopplungselement drehfest verbundenen Riegelhalter mit mindestens einer radialen Riegelführung und mit einem in der Riegelführung verschiebbaren Riegelkörper auf. Die Riegelführung muss keinesfalls exakt radiale Orientierung aufweisen, jedoch eine radiale Komponente aufweisen, so dass der Riegelkörper sich mit einer radialen Komponente, jedoch nicht zwangsläufig exakt radial, zwischen einer radial inneren und einer radial äußeren Position in der Riegelführung bewegen kann. Die Riegelführung muss nicht zwangsläufig quer zur Bewegungsrichtung des Riegelkörpers vollständig geschlossen ausgebildet sein, sondern kann auch rinnenartig offen ausgebildet sein. Der Riegelkörper kann beispielsweise stiftartig ausgebildet sein, ist jedoch bevorzugt als Kugel ausgebildet.

Dem Riegelhalter ist ein axial verschiebbarer Führungskörper mit einer zur Axialen geneigten Führungsfläche zugeordnet. Durch die zur Axialen geneigte Führungsfläche wird der Riegelkörper radial in eine Verriegelungsposition bewegt bzw. gezwungen. Die Führungsfläche ist die Fläche, die bei Bewegung des Führungskörpers in die Verriegelungsposition den Riegelkörper radial in eine Verriegelungsposition schiebt bzw. zwingt. Die Neigung der Führungsfläche zur Axialen bestimmt dabei den mechanischen Hebel zwischen der Axialbewegung des Führungskörpers und der Radialbewegung des Riegelkörpers.

Die Kupplungsanordnung weist ferner einen mit dem Kopplungselement oder dem Pumpenrotor drehfest verbundenen Fallenkörper mit mindestens einer rotatorischen Fallensenke auf, in die der Riegelkörper in seiner Verriegelungsposition radial eingreift. Der Fallenkörper ist ungefähr in der Querebene des Riegelhalters und koaxial zu dem Riegelhalter um die Pumpen-Axiale drehbar gelagert. Die Fallensenke ist ungefähr in der Ebene bzw. Querebene der Riegelführung angeordnet. Im Bereich der Fallensenke ist der Radius des Bodens der Fallensenke derart gewählt, dass der Riegelkörper teilweise in die Fallensenke hineinragt und teilweise in der Riegelführung des Riegelhalters verbleibt. Auf diese Weise wird eine formschlüssige Verbindung des Riegelhalters mit dem Fallenkörper hergestellt. Außerhalb der Fallensenke entspricht der Radius des Fallenkörpers beispielsweise ungefähr dem Radius des angrenzenden Riegelhalters.

Vorzugsweise ist der Riegelhalter drehfest mit dem Pumpenrotor und ist der Fallenkörper drehfest mit dem Kopplungselement verbunden. Vorzugsweise ist der Riegelhalter radial innerhalb des Falfenkörpers angeordnet. Solange sich der Riegelhalter dreht, wird der Riegelkörper durch die Fliehkraft radial nach außen gegen den Fallenkörper und gegebenenfalls in die Fallensenke bewegt. Im Entriegelungszustand kommt der Pumpenrotor zusammen mit dem Riegelhalter zum Stehen, so dass der Riegelkörper durch den sich weiterhin drehenden Fallenkörper innerhalb der Riegelführung des Riegelhalters gehalten wird. Erst wenn der Führungskörpers aus dem Entriegelungszustand in den Verriegelungszustand bewegt wird, drückt die geneigte Führungsfläche den Riegelkörper radial nach außen, so dass der Riegelkörper schließlich in die Fallensenke des Fallenkörper eingreift und der Riegelhalter zusammen mit dem Pumpenrotor mit dem rotierenden Fallenkörper mitgeschleppt wird.

Vorzugsweise sind mehrere Riegelführungen mit mehreren Riegelkörpern in dem Riegelhalter vorgesehen, wobei auch eine entsprechende Anzahl von Fallensenken an dem Fallenkörper vorgesehen ist. Hierdurch werden das übertragbare Drehmoment und die Redundanz bzw. die Ausfallsicherheit verbessert.

Gemäß einer bevorzugten Ausgestaltung ist an dem Führungskörper eine zylindrische Sperrfläche vorgesehen, durch die der Riegelkörper in der Verriegelungsposition des Riegelkörpers blockiert ist. Die Sperrfläche grenzt bevorzugt an die Führungsfläche axial unmittelbar an. In der Verriegelungsposition müssen auf diese Weise nur sehr geringe Haltekräfte aufgebracht werden, um den Riegelkörper in seiner Verriegelungsposition zu halten.

Gemäß einer bevorzugten Ausgestaltung ist der Führungskörper durch ein Vorspannelement in die Verriegelungsposition mechanisch vorgespannt. Falls die Aktuatorik zum Bewegen des Führungskörpers ausfällt, wird der Führungskörper durch das Vorspannelement stets in die Verriegelungsposition bewegt, so dass die Kupplungsanordnung in ihrem Verriegelungszustand verbleibt bzw. in diese gebracht wird. Hierdurch ist die Kupplungsanordnung ausfallsicher ausgebildet.

Grundsätzlich kann der verschiebbare Führungskörper durch einen elektrischen, elektromagnetischen, pneumatischen oder anderen Aktuator aktuiert werden. Bevorzugt wird die Kupplungsanordnung jedoch hydraulisch aktuiert. Da keine großen Stellkräfte erforderlich sind, kann hierfür beispielsweise der Schmiermittel-Betriebsdruck der Schmiermittelversorgung des Verbrennungsmotors genutzt werden.

Gemäß einer bevorzugten Ausgestaltung weist der Führungskörper einen hydraulischen Kolben auf, der in einem Hydraulikzylinder axial verschiebbar angeordnet ist, wobei der Hydraulikzylinder dem Riegelhalter drehfest zugeordnet ist. Die hydraulische Aktuatorik ist also vollständig dem Riegelhalter zugeordnet.

Vorzugsweise weist die Vakuumpumpe ein Pumpengehäuse auf, das insbesondere den Pumpenrotor umgibt und die Drehlagerung des gesamten Rotors aufweist. Das Pumpengehäuse weist bevorzugt einen hydraulischen Steuerungsanschluss auf, der hydraulisch mit dem Hydraulikzylinder verbunden ist. Bevorzugt ist der Steuerungsanschluss mit einem Ringkanal zwischen dem Pumpengehäuse und einem Zylinderkörper verbunden, der den Hydraulikzylinder radial begrenzt. Durch den geschlossenen Ringkanal kann die Hydraulikflüssigkeit, beispielsweise ein Schmiermittel, von dem feststehenden Gehäuse in den rotierenden Hydraulikzylinder fließen, bzw. umgekehrt von dem Hydraulikzylinder zurück zu dem feststehenden Gehäuse bzw. zu dem hydraulischen Steuerungsanschluss.

Gemäß einer bevorzugten Ausgestaltung weist das Pumpengehäuse einen separaten Schmierungsanschluss auf, der axial zwischen dem Steuerungsanschluss und dem Pumpenrotor angeordnet ist. Über den Schmierungsanschluss wird das Pumpenlager, insbesondere, wenn es als Gleitlager ausgebildet ist, geschmiert. Ferner kann über den Schmierungsanschluss auch die Pumpmimik mit Schmiermittel versorgt werden.

Gemäß einer besonders bevorzugten Ausgestaltung ist ein schaltbares hydraulisches Steuerungsventil vorgesehen, das in seinem Entriegelungszustand den Steuerungsdruck P1 der Hydraulikflüssigkeit zum Entriegeln auf den Steuerungsanschluss durchschaltet. Besonders bevorzugt ist das Steuerungsventil auch mit dem Schmierungsanschluss hydraulisch verbunden, wobei das Steuerungsventil in seinem Entriegelungszustand atmosphärischen Hydraulik-Druck P0 auf den Schmierungsanschluss durchschaltet. Auf diese Weise wird ein Kreislauf für die Hydraulikflüssigkeit geschaffen, so dass Leckströme der Hydraulikflüssigkeit gezielt und vollständig abgeführt werden und ein Volllaufen der Pumpmimik mit Hydraulikflüssigkeit verhindert werden kann.

Im Folgenden wird unter Bezugnahme auf die Zeichnungen ein Ausführungsbeispiel der Erfindung näher erläutert. Es zeigen:
Figur 1 einen Längsschnitt einer mechanischen Kfz-Vakuumpumpe im Verriegelungszustand,
Figur 2 einen Querschnitt II - II im Bereich der Kupplungsanordnung der Kfz-Vakuumpumpe der Figur 1,
Figur 3 einen Längsschnitt der mechanischen Kfz-Vakuumpumpe der Figur 1 im Entriegelungszustand, und
Figur 4 einen Querschnitt IV - IV im Bereich der Kupplungsanordnung der Kfz-Vakuumpumpe der Figur 3.

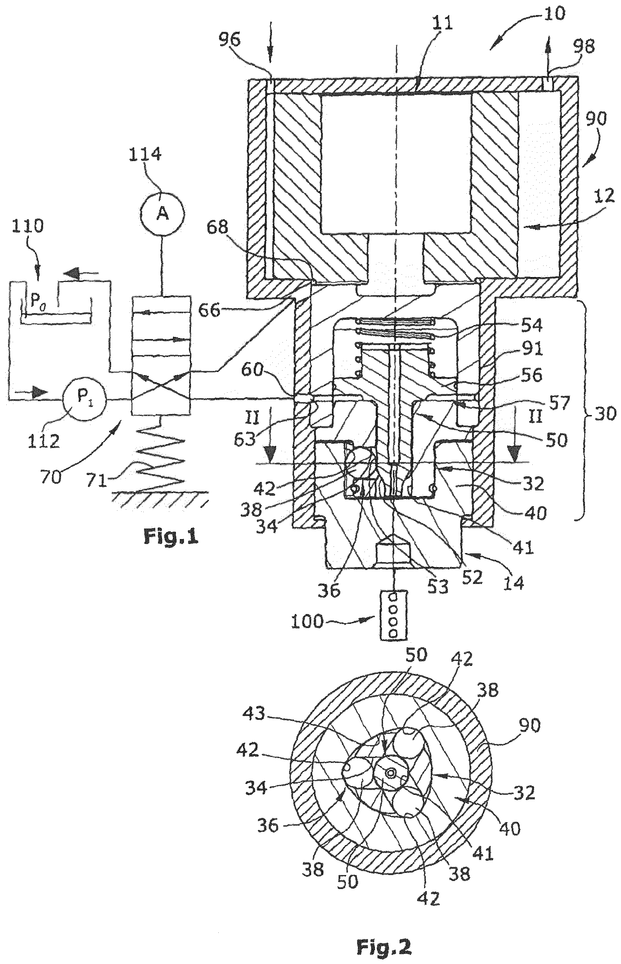

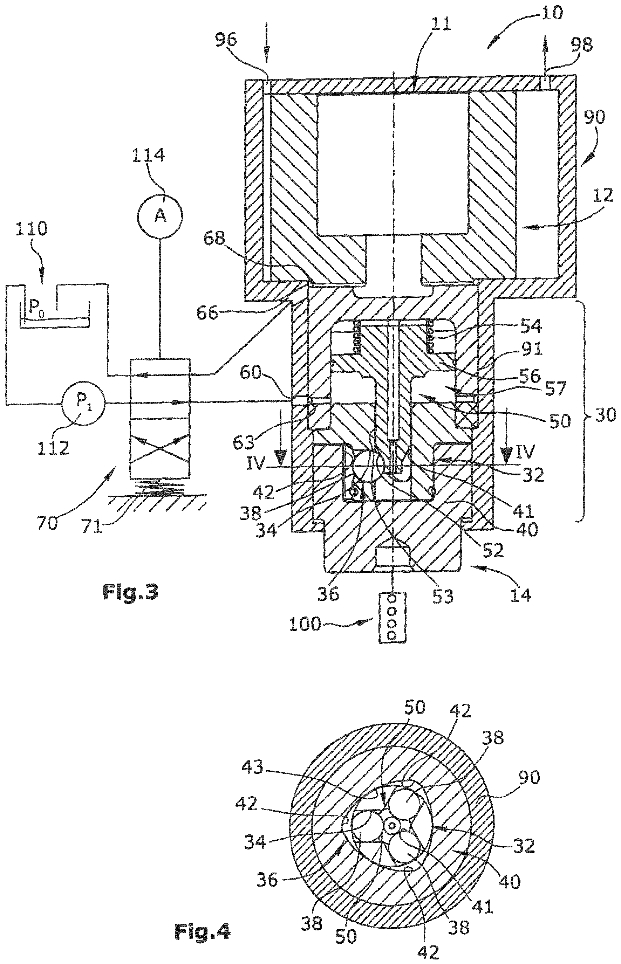

In den Figuren 1 und 3 ist eine schaltbare mechanische Kfz-Vakuumpumpe 10 dargestellt, die mechanisch gekoppelt ist an die Kurbelwelle oder die Nockenwelle eines Verbrennungsmotors 100. Die Vakuumpumpe 10 dient beispielsweise dazu, einen Unterdruck von unter 500 Millibar absolut für die Aktuatorik von Nebenaggregaten zur Verfügung zu stellen, beispielsweise für einen pneumatischen Bremskraftverstärker.

Die Vakuumpumpe 10 ist vorliegend als Verdrängerpumpe ausgebildet und weist einen Rotor 11 auf, der sich aus mehreren Teilen zusammensetzt. Der Rotor 11 weist einen Pumpenrotor 12 auf, der beispielsweise als Drehschieber-Pumpenrotor 12 ausgebildet ist. Der Rotor 11 weist ferner einen sich an den Pumpenrotor 12 axial anschließenden topfförmigen Zylinderkörper 16 auf, in dessen Innenraum ein Führungskörper 50 axial verschiebbar gelagert ist. Die zylindrische Außenseite des Zylinderkörpers 16 und die zylindrische Innenseite des betreffenden Abschnittes des Pumpengehäuses 90 bilden ein Rotorlager 91, das vorliegend als Gleitlager ausgebildet ist.

An den Zylinderkörper 16 schließt sich axial ein Riegelhalter 32 an, der den von dem Zylinderkörper 16 umgebenden zylindrischen Innenraum axial druckdicht verschließt. Der Pumpenrotor 12, der Zylinderkörper 16 und der Riegelhalter 32 sind drehfest miteinander verbunden, beispielsweise miteinander verschraubt, verlötet oder verschweißt, und bilden zusammen mit dem Führungskörper 50 den Rotor 11.

An den Rotor 11 schließt sich koaxial ein Kopplungselement 14 an, das mechanisch mit dem Verbrennungsmotor 100 gekoppelt ist. Das Kopplungselement 14 ist im Entriegelungszustand der Kupplungsanordnung 30 im Verhältnis zu dem Rotor 11 frei drehbar. Das Kopplungselement 14 ist beispielsweise durch ein Gleitlager in dem Pumpengehäuse 90 drehbar gelagert.

Das Pumpengehäuse 90 weist stirnseitig einen Sauganschluss 96 auf, der beispielsweise an die Arbeitskammer eines pneumatischen Bremskraftverstärkers angeschlossen werden kann. Ferner weist das Pumpengehäuse 90 stirnseitig einen Druckanschluss 98 auf, durch den das komprimierte Gas ausgestoßen wird.

Wie in den Figuren 2 und 4 dargestellt, weist der Riegelhalter 32 drei radial ausgerichtete Riegelführungen 34 auf, die vorliegend als in einer Querebene liegende Radialbohrungen ausgeführt sind und in einem Winkel von 120° zueinander angeordnet sind. In den Riegelführungen 34 ist jeweils ein Riegelkörper 36 angeordnet, der jeweils als Kugel 38 ausgebildet ist. Zwischen dem Riegelkörper 36 und der Riegelführung 34 ist ein geringes Spiel vorgesehen, so dass sich der Riegelkörper 36 widerstandslos in der Riegelführung 34 radial bewegen kann.

Der außenseitig zylindrisch ausgebildete Riegelhalter 32 ist umgeben von einem Fallenkörper 40, der innenseitig als dreiseitiges Innen-Trochoid 43 ausgebildet ist, wie in den Figuren 2 und 4 gut erkennbar ist. Jede Trochoid-Ecke bildet eine Fallensenke 42, in die jeweils eine Riegelkörper-Kugel 38 radial eingreift, wenn die Kupplungsanordnung 30 sich in dem in den Figuren 1 und 2 dargestellten Verriegelungszustand befindet. Der Innendurchmesser des Trochoides 43 ist geringfügig größer als der zylindrische Außendurchmesser des Riegelhalters 32, so dass sich der Fallenkörper 40 bzw. das Kopplungselement 14 in dem in den Figuren 3 und 4 dargestellten Entriegelungszustand in Bezug auf den Riegelhalter 32 frei drehen kann.

Der Riegelhalter 32 weist eine axiale Führungsbohrung 41 auf, in die die Riegelführungen 34 münden. In der Führungsbohrung 41 ist der teilweise zylindrische Führungskörper 50 axial verschiebbar gelagert. An dem distalen freien Längsende des Führungskörpers 50 ist eine zylindrische Sperrfläche 53 vorgesehen, an die sich distal eine sich konisch verjüngende Führungsfläche 52 anschließt. In der in den Figuren 1 und 2 dargestellten Verriegelungsposition des Führungskörpers 50 ist die zylindrische Sperrfläche 53 ausgerichtet mit der mittleren Querebene der Riegelführungen 34, so dass die Riegelkörper-Kugeln 38 radial nach außen geschoben und fixiert sind, und jeweils in die Fallensenken 42 hineinragen. In dem Verriegelungszustand ist ein Formschluss zwischen dem Riegelhalter 32 und dem Fallenkörper 40 hergestellt, so dass der Rotor 11 einschließlich des Pumpenrotors 12 drehfest mit dem Kopplungselement 14 verkoppelt ist.

In dem in den Figuren 3 und 4 dargestellten Entriegelungszustand steht der Führungskörper 50 axial in seiner Entriegelungsposition, so dass das distale Ende der konischen Führungsfläche 52 mit der mittleren Querebene der Riegelführungen 34 ausgerichtet ist. Hierdurch können die Riegelkörper-Kugeln 38 radial vollständig in die Riegelführungen 34 eingeschoben werden, so dass die Riegelkörper-Kugeln 38 nicht mehr zwangsweise in die Fallensenken 42 hineinragen. Durch die rotatorische Relativbewegung zwischen dem Fallenkörper 40 und dem Riegelhalter 32 werden die Riegelkörper-Kugeln 38 radial nach innen in die Riegelführungen 34 geschoben, so dass sich der Fallenkörper 40 in Bezug auf den Riegelhalter 32 frei drehen kann. In dem Entriegelungszustand kommt der Rotor 11 einschließlich des Pumpenrotors 12 schließlich zum Stillstand, auch wenn sich das Kopplungselement 14 weiterhin dreht.

Dem Führungskörper 50 ist einstückig ein Kolben 56 zugeordnet, der in einem Hydraulikzylinder 57 axial verschiebbar ist. Der Kolben 56 bzw. der Führungskörper 50 ist durch ein als Schraubenfeder ausgebildetes Vorspannelement 54 axial in die in den Figuren 1 und 2 dargestellte Verriegelungsposition mechanisch vorgespannt. Der Hydraulikzylinder 57 wird durch eine radiale Hydraulikleitung 64 in dem Zylinderkörper 16 hydraulisch gespeist, die in einem Ringkanal 63 am Außenumfang des Zylinderkörpers 16 mündet. Der Ringkanal 63 ist fluidisch mit einem hydraulischen Steuerungsanschluss 60 an dem Pumpengehäuse 90 verbunden.

In der Grenzebene zwischen dem Pumpenrotor 12 und dem Zylinderkörper 16 ist ein weiterer Ringkanal 68 vorgesehen, der mit einem Schmierungsanschluss 66 an dem Pumpengehäuse 90 verbunden ist. Der Steuerungsanschluss 60 und der Schmierungsanschluss 66 sind über entsprechende Hydraulikleitungen mit einem Steuerungsventil 70 verbunden, das vorliegend als 4/2 Umschaltventil ausgebildet ist.

Das Steuerungsventil 70 wird durch einen elektromagnetischen Aktuator 114 mechanisch geschaltet. Der Aktuator kann alternativ jedoch auch ein hydraulischer oder pneumatischer Aktuator sein. Durch das Steuerungsventil 70 kann der von einer Schmiermittelpumpe 112 generierte Arbeitsdruck P1 bzw. der in einem Schmiermitteltank 110 herrschende atmosphärische Druck P0 wechselseitig auf den Steuerungsanschluss 60 und den Schmierungsanschluss 66 aufgeschaltet werden. Das Steuerungsventil 70 ist durch ein Vorspannelement 71 in seine in der in den in der Figur 1 dargestellte Verriegelungsposition vorgespannt, so dass bei defektem Aktuator 114 der Hydraulikzylinder 57 stets an den atmosphärischen Druck P0 angeschlossen ist.

In dem in den Figuren 1 und 2 dargestellten Verriegelungszustand wird der Schmierungsanschluss 66 mit unter dem Arbeitsdruck P1 stehenden Schmiermittel beaufschlagt, so dass zum Einen der Pumpenrotor 12 und zum Anderen das Lager 91 geschmiert werden, wobei der Hauptstrom des Schmiermittels in axialer Richtung durch das Lager 91 zum Steuerungsanschluss 60 verläuft.

In dem in den Figuren 3 und 4 dargestellten Entriegelungszustand wird das unter Arbeitsdruck P1 stehende Schmiermittel über den Steuerungsanschluss 60 in den Hydraulikzylinder 57 eingespeist, so dass der Führungskörper 50 in seine Entriegelungsposition geschoben wird, wodurch wiederum schließlich das Kopplungselement 14 von dem Rotor 11 rotatorisch entkoppelt wird.

## Patentansprüche

1. Mechanische Kfz-Vakuumpumpe (10) mit
einem Pumpenrotor (12),
einem durch einen Verbrennungsmotor (100) mechanisch antreibbaren Kopplungselement (14), und
einer schaltbaren Formschluss-Kupplungsanordnung (30) zum drehfesten Verriegeln des Kopplungselements (14) mit dem Pumpenrotor (12) im Verriegelungszustand und zum Lösen des Kopplungselements (14) von dem Pumpenrotor (12) im Entriegelungszustand,
wobei die Kupplungsanordnung (30) aufweist:
einen mit dem Pumpenrotor (12) oder dem Kopplungselement (14) drehfest verbundenen Riegelhalter (32) mit mindestens einer radialen Riegelführung (34) und einem in der Riegelführung (34) verschiebbaren Riegelkörper (36),
einen dem Riegelhalter (32) zugeordneten axial verschiebbaren Führungskörper (50) mit einer zur Axialen geneigten Führungsfläche (52), durch die der Riegelkörper (36) radial in eine Verriegelungsposition gezwungen wird, und
einen mit dem Kopplungselement (14) oder dem Pumpenrotor (12) drehfest verbundenen Fallenkörper (40) mit mindestens einer rotatorischen Fallensenke (42), in die der Riegelkörper (36) in seiner Verriegelungsposition eingreift.

2. Mechanische Kfz-Vakuumpumpe (10) nach Anspruch 1, wobei an dem Führungskörper (50) eine zylindrische Sperrfläche (53) vorgesehen ist, durch die der Riegelkörper (36) in der Verriegelungsposition blockiert ist und die bevorzugt an die Führungsfläche (52) axial angrenzt.

3. Mechanische Kfz-Vakuumpumpe (10) nach einem der vorangegangenen Ansprüche, wobei der Führungskörper (50) durch ein Vorspannelement (54) in die Verriegelungsposition mechanisch vorgespannt ist.

4. Mechanische Kfz-Vakuumpumpe (10) nach einem der vorangegangenen Ansprüche, wobei die Fallensenke (42) radial außerhalb der Riegelführung (34) angeordnet ist.

5. Mechanische Kfz-Vakuumpumpe (10) nach einem der vorangegangenen Ansprüche, wobei der Riegelkörper (36) eine Kugel (38) ist.

6. Mechanische Kfz-Vakuumpumpe (10) nach einem der vorangegangenen Ansprüche, wobei die Kupplungsanordnung (30) hydraulisch betrieben wird.

7. Mechanische Kfz-Vakuumpumpe (10) nach einem der vorangegangenen Ansprüche, wobei der Führungskörper (50) einen hydraulischen Kolben (56) aufweist, der in einem Hydraulikzylinder (57) axial verschiebbar angeordnet ist, der dem Riegelhalter (32) drehfest zugeordnet ist.

8. Mechanische Kfz-Vakuumpumpe (10) nach einem der vorangegangenen Ansprüche, wobei ein Pumpengehäuse (90) vorgesehen ist, das einen hydraulischen Steuerungsanschluss (60) aufweist, der hydraulisch mit dem Hydraulikzylinder (57) verbunden ist.

9. Mechanische Kfz-Vakuumpumpe (10) nach Anspruch 8, wobei der Steuerungsanschluss (60) mit einem Ringkanal (63) zwischen dem Pumpengehäuse (90) und einem Zylinderkörper (16) verbunden ist, der den Hydraulikzylinder (57) radial begrenzt.

10. Mechanische Kfz-Vakuumpumpe (10) nach einem der Ansprüche 8 oder 9, wobei das Pumpengehäuse (90) einen separaten Schmierungsanschluss (66) aufweist, der axial zwischen dem Steuerungsanschluss (60) und dem Pumpenrotor (12) angeordnet ist.

11. Mechanische Kfz-Vakuumpumpe (10) nach Anspruch 10, wobei ein schaltbares Steuerungsventil (70) vorgesehen ist, das in seinem Entriegelungszustand den Steuerungsdruck P1 der Hydraulikflüssigkeit zum Entriegeln auf dem Steuerungsanschluss (60) durchschaltet.

12. Mechanische Kfz-Vakuumpumpe (10) nach Anspruch 11, wobei das Steuerungsventil (70) mit dem Schmierungsanschluss (66) hydraulisch verbunden ist, und im Entriegelungszustand atmosphärischen Druck P0 auf den Schmierungsanschluss (66) durchschaltet.

## Claims

1. A mechanical motor vehicle vacuum pump (10) comprising:
a pump rotor (12);
a coupling element (14) configured to be mechanically driven by an internal combustion engine (100); and
a clutch arrangement (20) which is switchable and positively locking, the clutch arrangement being configured to lock the coupling element (34) to the pump rotor (12) in a locked position so that the coupling element rotates together with the pump rotor, and to release the coupling element (14) from the pump rotor (12) in a released position,
the clutch arrangement (30) comprising:
a bolt holder (32) connected to the pump rotor (12) or to the coupling element (14) so as to rotate therewith, the bolt holder comprising at least one radial bolt guide (34) and a bolt body (36) which is configured to be displaceable in the radial bolt guide (34),
a guide body (50) configured to be axially displaceable, the guide body comprising a guiding surface (52) which is inclined with respect to an axial plane, the guide body being assigned to the bolt holder (32), the bolt body (36) being forced radially into a locking position via the guiding surface, and
a catch body (40) connected to the coupling element (14) or to the pump rotor (12) so as to rotate therewith, the catch body having at least one rotational catch depression (42) which is configured to have the bolt body engage (36) therewith in its locking position.

2. The mechanical motor vehicle vacuum pump (10) as recited in claim 1, wherein the guide body (50) further comprises a cylindrical blocking surface (53) configured to block the bolt body (36) in the locking position and which preferably adjoins the guiding surface (52) in an axial direction.

3. The mechanical motor vehicle vacuum pump (10) as recited in one of the preceding claims, wherein the guide body (50) is mechanically pretensioned into the locking position by a pre-tensioning element (54).

4. The mechanical motor vehicle vacuum pump (10) as recited in one of the preceding claims, wherein the catch depression (42) is arranged radially outside the at least one bolt guide (34).

5. The mechanical motor vehicle vacuum pump (10) as recited in one of the preceding claims, wherein the bolt body (36) is a ball (38).

6. The mechanical motor vehicle vacuum pump (10) as recited in one of the preceding claims, wherein the clutch arrangement (30) is operated hydraulically.

7. The mechanical motor vehicle vacuum pump (10) as recited in one of the preceding claims, wherein the guide body (50) comprises a hydraulic piston (58) arranged for axial displacement in a hydraulic cylinder (57) assigned to the bolt holder (32) so as to rotate therewith.

8. The mechanical motor vehicle vacuum pump as recited in one of the preceding claims, wherein a pump housing (90) is provided which comprises a hydraulic control port (60) which is hydraulically connected with the hydraulic cylinder (57).

9. The mechanical motor vehicle vacuum pump (10) as recited in claim 8, wherein the hydraulic control port (60) is connected with an annular channel (63) between the pump housing (90) and the cylinder body (16), which radially delimits the hydraulic cylinder (57).

10. The mechanical motor vehicle vacuum pump as recited in one of claims 8 or 9, wherein the pump housing (90) comprises a separate lubrication port (66) arranged axially between the hydraulic control port (60) and the pump rotor (12).

11. The mechanical motor vehicle vacuum pump (10) as recited in claim 10, wherein a switchable control valve (57) which, in its released state, is configured to transmit a control pressure P1 of a hydraulic liquid to the hydraulic control port (60) for a release.

12. The mechanical motor vehicle vacuum pump (10) as recited in claim 11, wherein the control valve (70) is hydraulically connected with the lubrication port (66) and, in the released state, is configured to transmit an atmospheric pressure P0 to the lubrication port (66).

## Revendications

1. Pompe à vide (10) mécanique d'automobile avec
un rotor de pompe (12),
un élément de couplage (14) apte à être entrainé mécaniquement par un moteur à combustion interne (100), et
un ensemble de couplage (30) par liaison active, commutable et destiné à verrouiller, de manière solidaire en rotation, l'élément de couplage (14) avec le rotor de pompe (12) dans l'état verrouillé et à dégager l'élément de couplage (14) du rotor de pompe (12) dans l'état dégagé,
dans laquelle l'ensemble de couplage (30) comprend:
un porte-verrou (32) lié de manière solidaire en rotation avec le rotor de pompe (12) ou l'élément de couplage (14), le porte-verrou comprenant au moins un guide de verrou (34) vertical et un corps de verrou (36) déplaçable dans le guide de verrou (34),
un corps de guidage (50) associé au porte-verrou (32) et déplaçable dans la direction axiale, le corps de guidage ayant une surface de guidage (52) inclinée par rapport au plan axial, par laquelle le corps de verrou (36) est forcé radialement dans une position verrouillée, et
un corps de loqueteau (40) lié de manière solidaire en rotation avec l'élément de couplage (14) le rotor de pompe (12), comprenant au moins une cavité à loqueteau (42) rotative dans laquelle s'engage le corps de verrou (36) dans sa position verrouillée.

2. Pompe à vide (10) mécanique d'automobile selon la revendication 1, dans laquelle une surface de blocage (53) cylindrique est prévue sur le corps de guidage (50), par laquelle le corps de verrou (36) est bloqué dans la position verrouillée et qui est, de préférence, axialement adjacente à la surface de guidage (52).

3. Pompe à vide (10) mécanique d'automobile selon l'une quelconque des revendications précédentes, dans laquelle le corps de guidage (50) est mécaniquement précontraint dans la position verrouillée par un élément de précontrainte.

4. Pompe à vide (10) mécanique d'automobile selon l'une quelconque des revendications précédentes, dans laquelle la cavité à loqueteau (42) est disposée radialement en dehors du guide de verrou (34).

5. Pompe à vide (10) mécanique d'automobile selon l'une quelconque des revendications précédentes, dans laquelle le corps de guidage (50) est une sphère (38).

6. Pompe à vide (10) mécanique d'automobile selon l'une quelconque des revendications précédentes, dans laquelle l'ensemble de couplage (30) est opéré hydrauliquement.

7. Pompe à vide (10) mécanique d'automobile selon l'une quelconque des revendications précédentes, dans laquelle le corps de guidage (50) comprend un piston hydraulique (56) disposé de façon qu'il soit déplaçable dans la direction axiale dans un cylindre hydraulique (57) associé au porte-verrou (32) de manière solidaire en rotation.

8. Pompe à vide (10) mécanique d'automobile selon l'une quelconque des revendications précédentes, dans laquelle un boitier de pompe (90) est prévu, qui comprend un raccord de commande (60) hydraulique relié hydrauliquement au cylindre hydraulique (57).

9. Pompe à vide (10) mécanique d'automobile selon la revendication 8, dans laquelle le raccord de commande (60) est relié à un canal annulaire (63) entre le boitier de pompe (90) et un corps de cylindre (16) radialement délimitant le cylindre hydraulique (57).

10. Pompe à vide (10) mécanique d'automobile selon l'une des revendications 8 ou 9, dans laquelle le boitier de pompe (90) comprend un raccord de lubrification (66) séparé qui est disposé axialement entre le raccord de commande (60) et le rotor de pompe (12).

11. Pompe à vide (10) mécanique d'automobile selon la revendication 10, dans laquelle une vanne de commande (70) commutable es prévue, qui, dans son état de déverrouillage, passe la pression de commande P1 de la liquide hydraulique au raccord de commande (60) pour un déverrouillage.

12. Pompe à vide (10) mécanique d'automobile selon la revendication 11, dans laquelle une vanne de commande (70) est raccordée hydrauliquement au raccord de lubrification (66) et, dans l'état de déverrouillage, passe la pression P0 au raccord de lubrification (66).
